# EUROPÄISCHE PATENTANMELDUNG

(11) **EP 1 182 094 A1**
(43) Veröffentlichungstag der Anmeldung: **27.02.2002**
(21) Anmeldenummer: 00118464.7
(22) Anmeldetag: 25.08.2000
(51) Int. Cl.: B60R 19/00, B60R 21/34, F16F 7/12, B32B 3/28

(54) **Verbundbauteil für Kraftfahrzeuge**

(71) Anmelder: Siemens Restraint Systems GmbH, 63755 Alzenau (DE)
(72) Erfinder: Vetter, Johannes, 63846 Laufach (DE)
(74) Vertreter: Fuchs Mehler Weiss & Fritzsche

(57) **Zusammenfassung**

Es wird ein Verbundbauteil (1) für Kraftfahrzeuge mit mindestens einer das Verbundbauteil (1) außen bedeckenden unteren (3) und oberen Begrenzungsschicht (2) und einer zwischen diesen Begrenzungsschichten (2,3) angeordneten Zwischenlage (4) vorgestellt. Das Verbundbauteil (1) soll sowohl eine ausreichende Festigkeit aufweisen als auch über die Fähigkeit einer hohen Energieabsorption verfügen, ohne ein gegenüber herkömmlichen Bauteilen vergrößertes Bauteilvolumen zu erfordern. Erreicht wird dies durch ein Verbundbauteil (1), bei dem die Zwischenlage (4) mindestens drei wellenförmige formsteife Einzellagen (5,6,7) umfaßt, bei denen der Abstand s zwischen jeweils einem Wellenberg (8) und einem Wellental (9) für jede Einzellage (5,6,7) konstant ist und darüber hinaus für alle Einzellagen (5,6,7) gleich groß ist, wobei das Verbundbauteil (1) durch Änderung seiner Struktur von einer Ruheposition in eine Arbeitsposition (Fig. 2) wechseln kann, indem die mittlere Einzellage 7 gegenüber den benachbarten Einzellagen 5,6 um den Abstand s in Richtung ihrer Hauptachse 10 verschoben wird.

## Beschreibung

Die Erfindung betrifft ein Verbundbauteil für Kraftfahrzeuge mit mindestens einer das Verbundbauteil außen bedeckenden unteren und oberen Begrenzungsschicht und einer zwischen der mindestens einen unteren und der mindestens einen oberen Begrenzungsschicht angeordneten Zwischenlage.

Der Hintergrund für den Einsatz derartiger Verbundbauteile ist in erster Linie der Schutz der Unfallgegner eines Kraftfahrzeuges, insbesondere der Schutz von Fußgängern und Zweiradfahrern. Darüberhinaus bieten solche Verbundbauteile aber den Fahrzeuginsassen der Kraftfahrzeuge selbst auch einen erhöhten Schutz.

Fußgänger und Zweiradfahrer, die zu den schwächeren Verkehrsteilnehmern zählen, sind darauf angewiesen, daß ihre häufig stärkeren Unfallgegner, insbesondere Kraftfahrzeuge, Maßnahmen und entsprechende Einrichtungen zu ihrem Schutz bereitstellen. Fahrer und Insassen von Kraftfahrzeugen sind von einer sie schützenden Karosserie umgeben und verfügen darüber hinaus über ein System von zusätzlich im Fahrzeug integrierten Schutzeinrichtungen wie Gurtsysteme und Airbags. Sie haben somit einen ausreichenden, eigenen Schutz, wohingegen Fußgänger und Zweiradfahrer in ihren Möglichkeiten, sich selbst zu schützen, stark eingeschränkt und in einer Unfallsituation ohne Zwischenschaltung geeigneter Vorrichtungen meist körperlich direkt betroffen sind. Schutzvorrichtungen im eigentlichen Sinne sind für Fußgänger nicht vorgesehen. Der Fußgänger gilt als der schwächste Verkehrsteilnehmer, der in der Regel darauf angewiesen ist, daß seine Unfallgegner ihn schützende Maßnahmen bzw. Einrichtungen zur Verfügung stellen. Bei Zweiradfahrern stellt sich die Situation nicht wesentlich anders dar. Bei Radfahrern erschöpfen sich die Schutzvorrichtungen im günstigsten Fall in einem Helm, wohingegen bei Zweikrafträdern der gesetzlich vorgeschriebene Schutzhelm durch eine Schutzkleidung ergänzt werden kann.

Diese für Fußgänger und Zweiradfahrer bereitgestellten Schutzvorrichtungen können aber in keiner Weise mit dem breiten Schutz verglichen werden, der den Insassen eines Kraftfahrzeuges durch die sie umgebende Fahrzeugkarosserie gewährt wird.

Aus den genannten Gründen konzentrieren sich die Entwicklungsarbeiten in der Kraftfahrzeugtechnik darauf, die Bereiche des Kraftfahrzeuges, die sich bei Unfällen mit Fußgängern und Zweiradfahrern als die häufigsten Aufprallzonen herausgestellt haben, konstruktiv so zu gestalten, daß die Verletzungsgefahr der Beteiligten reduziert wird. Unfallstatistiken und Crashversuche weisen als häufigste Aufprallzone die Frontpartie und hier insbesondere die Motorhaube des Kraftfahrzeuges und damit als den für Sicherheitsmaßnahmen relevantesten Bereich aus. Neben dieser Anforderung an die Frontpartie wird gleichzeitig die Forderung erhoben, ein Kraftfahrzeug solle einen um 40% außermittigen Frontalaufprall mit geringen Geschwindigkeiten bis 15 km/h unbeschädigt überstehen, wobei beide Ziele in Konkurrenz zueinander treten können, da sich Festigkeit einerseits und die Fähigkeit hoher Energieabsorption andererseits gegenseitig einschränken können. Es kommen die grundsätzlichen Zielsetzungen des Kraftfahrzeugbaus hinzu, gewichtssparend und raumsparend zu konstruieren, wobei raumsparend u.a. bedeutet, daß die Bauteile ein möglichst geringes Bauvolumen aufweisen sollen. Der der konstruktiven Ausgestaltung des Frontbereiches zugrundeliegende Gedanke ist, daß die bei einem Unfall zwischen einem Kraftfahrzeug und einer im Frontbereich auftreffenden Person freiwerdenden Energie zum größstmöglichen Teil vom Kraftfahrzeug absorbiert werden soll und der kleinere Teil durch Deformation des Körpers der unfallbeteiligten Person selbst. Ziel ist es also, den Frontbereich eines Kraftfahrzeuges so zu gestalten, daß die Fähigkeit im Falle eines Aufpralls, Energie zu absorbieren, optimiert ist. Hierzu finden nach dem Stand der Technik verschiedene Lösungsansätze in der Praxis Anwendung.

Ein erster Lösungsansatz sieht die Verwendung von Verbundwerkstoffen vor. Diese Werkstoffe, die aus zwei oder mehreren Komponenten bestehen, gestatten über die Kombination verschiedener Materialien die gleichzeitige Kombination ihrer Materialeigenschaften. Entsprechend dem jeweiligen Anforderungsprofil kommt ein hierfür abgestimmter Verbundwerkstoff zum Einsatz. So findet im vorliegenden Fall ein Verbundwerkstoff Anwendung, der sowohl eine ausreichende Festigkeit entsprechend der Forderung nach einer hohen Karosseriesteifigkeit aufweist, daneben aber auch ein hohes Energieabsorptionsvermögen hat. Hervorzuheben sind in diesem Zusammenhang die sogenannten Shape Memory Materials, die nach einer Deformation reversibel die ursprüngliche Form annehmen.

Einen weiteren Lösungsansatz bieten Verbundbauteile. Verbundbauteile sind zunächst mit dem Ziel eingesetzt worden, die Reduzierung des Fahrzeuggewichtes voranzutreiben. Diese Teile bestehen in der Regel aus Kunststoffformteilen mit eingegossenen metallischen Verstärkungen und/oder außen aufliegenden dünnen Abdeckungen. Die Gewichtseinsparungen liegen im Bereich von 20 - 25 %. Die Weiterentwicklung dieser Verbundbauteile erfolgte mit der Zielsetzung, daß diese Verbundbauteile neben ihren Vorteilen hinsichtlich der Gewichtseinsparung auch der Anforderung nach einer hohen Nachgiebigkeit bzw. Energieabsorption bei einem Aufprall genügen sollen. Es wurden Verbundteile entwickelt, die aus mehreren Komponenten bestehen, welche formschlüssig zu einem leichten und hochfesten Bauteil miteinander verbunden werden, und die im Fall eines Aufpralls ihre formschlüssige Verbindung teilweise oder ganz lösen bzw. lockern. Hierdurch soll die Festigkeit des gesamten Verbundbauteils herabsetzt werden. Da die Gesamtfestigkeit des Verbundbauteils auf dem Zusammenwirken seiner einzelnen Komponenten beruht, kann die gewünschte Entfestigung dadurch erreicht werden, daß der Verbund zwischen den einzelnen Komponenten ganz oder teilweise aufgelöst wird, so daß aus dem ursprünglich sehr formsteifen Verbundbauteil ein relativ leicht verformbares Ensemble von mehr oder weniger voneinander getrennten Komponenten entsteht.

Nachteilig an den nach dem Stand der Technik verwendeten Verbundbauteilen bzw. Verbundwerkstoffen ist das große Bauteilvolumen, das im Wiederspruch zu der grundlegenden Zielsetzung einer raumsparenden Konstruktion steht. Die Fähigkeit hoher Energieabsorption verbunden mit einer ausreichenden Festigkeit führt nach dem Stand der Technik zu voluminösen Bauteilen.

Eine aus Verbundwerkstoffen gefertigte Motorhaube bzw. eine als Verbundteil ausgelegte Motorhaube, die das Ziel haben soll, möglichst viel Energie absorbieren zu können, ist voluminöser als eine herkömmliche Motorhaube, die in der Regel aus dünnen Metall- oder Kunststoffblechen gefertigt wird.

Vor diesem Hintergrund ist es die Aufgabe der Erfindung, ein Verbundbauteil für Kraftfahrzeuge bereitzustellen, daß sowohl über die Fähigkeit hoher Energieabsorption verfügt als auch eine ausreichende Festigkeit aufweist, wobei keine Vergrößerung des Bauteilvolumens gegenüber herkömmlichen Bauteilen auftreten soll.

Gelöst wird die Aufgabe durch ein Verbundbauteil mit mindestens einer unteren und oberen Begrenzungsschicht und einer zwischen diesen angeordneten Zwischenlage, das dadurch gekennzeichnet ist, daß die Zwischenlage mindestens drei wellenförmige, formsteife, gegeneinander verschiebare Einzellagen umfaßt, bei denen sowohl bei jeder einzelnen Einzellage als auch bei den Einzellagen untereinander jeweils die Abstände s zwischen einem Wellenberg und einem Wellental von gleicher Größenordnung sind und daß zumindest die obere Einzellage bewegbar ist und die mittlere Einzellage so verschiebbar ist, daß die Einzellagen in einer Ruheposition in der Art angeordnet sind, daß jeweils die Wellenberge und jeweils die Wellentäler der Einzellagen aufeinanderliegen, und in einer Arbeitsposition in der Art angeordnet sind, daß die mittlere Einzellage gegenüber den benachbarten Einzellagen um den Abstand s tangential zu den Wellenbergen oder Wellentälern verschoben ist.

Das Funktionsprinzip des Verbundbauteils beruht im wesentlichen auf seiner Fähigkeit, die Struktur ändern zu können. Die Eigenschaft des Verbundbauteiles, seine Struktur verändern zu können, bewirkt, daß ein und dasselbe Bauteil die teilweise in Konkurrenz stehenden Zielsetzungen verwirklicht. Eine ausreichende Festigkeit, die Fähigkeit hoher Energieabsorption und eine raumsparende Konstruktion werden bei den Bauteilen nach dem Stand der Technik nur unter Eingehung von Kompromissen verwirklicht. Keine der genannten Zielsetzungen kann bei den herkömmlichen Bauteilen optimiert werden, ohne bei den übrigen Zielsetzungen Nachteile akzeptieren zu müssen. Hingegen treten die genannten Zielsetzungen bei dem erfindungsgemäßen Verbundvorteil nicht in Konkurrenz, wobei durch die konstruktive Ausgestaltung des Verbundbauteils, insbesondere der Fähigkeit zur Strukturänderung, erreicht wird, daß sämtlichen an das Bauteil gestellten Anforderungen in ihrer Gesamtheit Rechnung getragen wird.

Eine ausreichende Festigkeit weist das Verbundbauteil in seiner Ruheposition auf, in der die mindestens drei wellenförmigen Einzellagen in der Art angeordnet sind, daß sich die vorzugsweise formidentischen Einzellagen aneinander schmiegen und jede Einzellage auf diese Weise einen großflächigen Kontakt zu der mindestens einen benachbarten Einzellage aufweist. Hierdurch bilden die Einzellagen in der Ruheposition eine formsteife, feste Zwischenlage, die durch eine untere und obere Begrenzungsschicht bedeckt wird und hierdurch einerseits an Festigkeit weiter zunimmt und andererseits eine glatte Außenkontur erhält. Zudem führt die Anordnung der Zwischenlagen in der Ruheposition und somit die Struktur des Verbundbauteiles insgesamt zu einem mit herkömmlichen Bauteilen vergleichbaren Bauteilvolumen.

Dies läßt sich leicht veranschaulichen durch einen Vergleich zwischen einer herkömmlichen Motorhaube und einer mittels des erfindungsgemäßen Verbundbauteiles gefertigten Motorhaube. Grundsätzlich weisen Motorhauben eine Deckschicht bzw. Außenhaut auf, die vergleichbar mit der oberen Begrenzungsschicht ist bzw. von dieser ausgebildet wird. Des weiteren wird eine Motorhaube an ihrer zum Motor hingerichteten Innenfläche mit Streben verstärkt, um der wenig formsteifen, großflächigen Deckschicht eine ausreichende Festigkeit zu geben. Diese Streben werden bei Verwendung des erfindungsgemäßen Verbundbauteils durch die Zwischenlage ersetzt. Damit wird kein zusätzliches Bauteil eingebracht, sondern ein Substitut für die herkömmlichen Bauteilelemente. Folglich weisen beide Motorhauben vergleichbare Bauteilvolumina und Festigkeiten auf.

In der Arbeitsposition sind die Einzellagen der Zwischenschicht so angeordnet, daß die mittlere Einzellage gegenüber der unten und oben benachbarten Einzellage um den Abstand s in Richtung der Hauptachsen der Einzellagen verschoben ist. Weil der Abstand s, um den die mittlere Einzellage verschoben wird, auch das geometrische Maß für den Abstand zwischen jeweils einem Wellenberg und einem Wellental jeder einzelnen Einzellage ist und dieser Abstand für jede Einzellage gleich groß ist, haben die Einzellagen in der Arbeitsposition im wesentlichen im Bereich ihrer Wellenberge und Wellentäler Kontakt.

Die mittlere Einzellage hat in der Arbeitsposition im Bereich ihrer Wellenberge Kontakt mit der benachbarten oberen Einzellage, wobei die Wellenberge der mittleren Einzellage mit den Wellentälern der oberen Einzellage in Berührung stehen. Hinsichtlich der benachbarten unteren Einzellage ergibt sich ein ähnliches Bild. Die mittlere Einzellage hat mit der benachbarten unteren Einzellage im Bereich ihrer Wellentäler Kontakt, wobei sich die Wellentäler der mittleren Einzellage und die Wellenberge der benachbarten unteren Einzellage berühren.

Die Einzellagen sind in ihrer Grundform wellenförmig. Damit ist die Ausbildung der Einzellagen aber nicht auf solche Einzellagen beschränkt, die durch Zusammenfügen einer Vielzahl von runden bzw. bogenförmigen Abschnitten gebildet werden. Vielmehr sind sämtliche Formen zulässig, die ein Verschieben der Einzellagen gegeneinander ermöglichen. Eine sinusförmige Ausbildung der Einzellagen und auch Abwandlungen dieser durch beispielsweise eine Stauchung oder Streckung werden ebenfalls durch das Merkmal "wellenförmig" erfaßt. Eine Einzellage ist ebenfalls durch gerade bzw. ebene Abschnitte ausformbar. Beispielsweise durch gleichschenklige Dreiecke, bei denen vorzugsweise die Spitze weggelassen wird, wodurch die Wellenberge und die Wellentäler einen ebenen Bereich aufweisen und in der Arbeitspositionen über eine größere Fläche Kontakt haben. Dies macht die Gesamtkonstruktion in der Arbeitsposition stabiler.

Die Strukturänderung des Verbundbauteiles, die durch Verschieben der mittleren Einzellage um den Abstand s erfolgt, hat im wesentlich zwei Effekte, die im Hinblick auf die Lösung der erfindungsgemäßen Aufgabe im Vordergrund stehen.

Zum einen wird durch Verschieben der mittleren Einzellage das Bauteilvolumen in der Art erweitert, daß der Verformungsweg senkrecht zu der unteren bzw. oberen Begrenzungsschicht vergrößert wird. Damit wird die Verzögerung eines auf die obere Begrenzungsschicht auftreffenden Gegenstandes bzw. einer auftreffenden Person früher eingeleitet. Darüberhinaus wird beispielsweise bei einer aus dem erfindungsgemäßen Verbundbauteil gefertigten Motorhaube der hinsichtlich Sicherheit maßgebliche Abstand zum Motorblock vergrößert.

Zum anderen wird das Verbundbauteil durch die Strukturänderung gewissermaßen entfestigt, damit elastischer und leichter verformbar. Das Verbundbauteil weist in seiner Arbeitsposition ein verbessertes Verhalten hinsichtlich der Energieabsorption auf. Die beim Aufprall eines Gegenstandes oder einer Person auf das Verbundbauteil freiwerdene Energie kann schonender abgebaut werden und darüberhinaus werden generell größere Gesamtenergiemengen abgebaut. Wie oben bereits ausgeführt, ist es Ziel der Fahrzeugkonstruktion, möglichst wenig Energie über den auftreffenden Gegenstand bzw. die auftreffende Person und deren Deformation zu vernichten bzw. umzuwandeln. Hingegen soll möglichst viel Energie bei einem Aufprall durch das Fahrzeugbauteil vernichtet werden.

Somit verfügt das erfindungsgemäße Verbundbauteil aufgrund seiner Fähigkeit zur Strukturänderung in der Ruheposition über eine ausreichende Festigkeit und ein mit herkömmlichen Bauteilen vergleichbares Bauteilvolumen und zusätzlich in der für einen Unfall relevanten Arbeitsposition die Fähigkeit hoher Energieabsorption und ausreichender Elastizität.

Vorteilhaft sind Verbundbauteile, bei denen die obere Einzellage der Zwischenlage mit der oberen Begrenzungsschicht verbunden ist.

Vorzuziehen sind Verbundbauteile, bei denen die obere Einzellage der Zwischenlage mit der oberen Begrenzungsschicht im Bereich der Wellenberge verbunden ist.

Durch die Verbindung der oberen Begrenzungsschicht mit der oberen Einzellage in eine Fixierung der Begrenzungsschicht grundsätzlich und gerade beim Wechsel der Einzellagen von der Ruheposition in die Arbeitsposition gewährleistet.

Ebenso günstig sind Verbundbauteile, die dadurch gekennzeichnet sind, daß die untere Einzellage der Zwischenlage mit der unteren Begrenzungsschicht verbunden ist.

Bei der überwiegenden Zahl der Anwendungsfälle ist die untere Begrenzungsschicht fixiert, wodurch die auf ihr aufliegende untere Einzellage in einfacher Weise durch Verbinden mit der unteren Begrenzungsschicht ebenfalls fixiert wird. Im Fahrzeugbau bietet sich beim Einsatz des erfindungsgemäßen Verbundbauteiles die Fixierung an der Karroserie an. Die untere Begrenzungsschicht ist dann fahrzeugfest und dient als Fixierung für andere Bauelemente.

Vorzuziehen sind Verbundbauteile, bei denen die untere Einzellage der Zwischenlage mit der unteren Begrenzungsschicht im Bereich der Wellentäler verbunden ist.

Eine günstige Ausführungsform des Verbundbauteiles ist dadurch gekennzeichnet, daß die untere Begrenzungsschicht mit der oberen Begrenzungsschicht mittels mindestens eines Verbindungsmittels beweglich verbunden ist.

Die Verbindung der beiden Begrenzungsschichten hat u.a. zum Ziel, auf die relative Bewegung der beiden Bauteile zueinander Einfluß zu nehmen. Im Rahmen des Wechsels von der Ruheposition in die Arbeitsposition, was durch Verschieben der mittleren Einzellage erfolgt, bewegen sich die beiden Begrenzungsschichten auseinander und dies im wesentlichen in Richtung einer auf ihnen stehenden Senkrechten. Abhängig von der wellenförmigen Ausbildung der Einzellagen bzw. der Ausbildung der Wellentäler und Wellenberge ist aber auch eine begrenzte Relativbewegung tangential zu den Wellenbergen oder Wellentälern und in Richtung der Hauptachsen der Einzellagen akzeptabel.

Vorteile bieten Verbundbauteile, bei denen das mindestens eine Verbindungsmittel außerhalb der Zwischenlage angeordnet ist. Hierdurch entfällt eine konstruktive Modifikation der Zwischenlage, die bei innerhalb der Zwischenlage angeordneten Verbindungsmittel erforderlich wird.

Bei einigen Anwendungsfällen bieten hingegen Ausführungsformen des Verbundbauteiles Vorteile, die dadurch gekennzeichnet sind, daß das mindestens eine Verbindungsmittel innerhalb der Zwischenlage angeordnet ist, wobei mindestens eine Öffnung in der Zwischenlage vorzusehen ist, durch die das mindestens eine Verbindungsmittel durchgeführt wird. Die Anordnung des Verbindungsmittels innerhalb der Zwischenlage ist günstig und erforderlich, wenn außerhalb der Zwischenlage der für das mindestens eine Verbindungsmittel erforderliche Bauraum nicht zur Verfügung steht.

Günstig sind Ausführungsformen, bei denen das mindestens eine Verbindungsmittel eine Stange ist, die an der unteren Begrenzungsschicht und an der oberen Begrenzungsschicht jeweils mit einem ihrer Enden gelenkig gelagert ist. Die gelenkige Lagerung der beiden Stangenenden an der jeweiligen Begrenzungsschicht ist zwingend, um ein Auseinandergehen der beiden Begrenzungsschichten, das infolge des Verschiebens der mittleren Einzellage erforderlich wird, zu ermöglichen. Darüberhinaus beschränkt eine derartig angeordnete Stange die relative Bewegung der beiden Begrenzungsschichten in Richtung der Hauptachsen der Einzellagen, also in Richtung der Tangenten der Wellenberge und Wellentäler. Vorzugsweise soll eine solche Bewegung wie oben bereits geschildert nur in engen Grenzen zugelassen werden. Die Verbindung der oberen Begrenzungsschicht mit der unteren Begrenzungsschicht muß grundsätzlich ein Auseinanderdrücken der Begrenzungsschichten beim Wechsel von der Ruhe- in die Arbeitsposition zulassen, um die Funktionstüchtigkeit des erfindungsgemäßen Verbundbauteiles zu gewährleisten.

Günstige Ausführungsformen des Verbundbauteiles sind dadurch gekennzeichnet, daß das mindestens eine Verbindungsmittel ein elastisches Band ist. Dieses Band dient im wesentlichen der Festigkeit des Verbundbauteiles und kann abhängig von seiner jeweiligen Ausführungsform nur begrenzt nicht in der Art und Weise wie die gelenkig gelagerte Stange die relative Bewegung der Begrenzungsschichten in Richtung der Hauptachsen der Einzellagen beeinflussen . Das Band ist aber mit weniger Aufwand in das Verbundbauteil zu implementieren und trägt nur unerheblich zu einer Steigerung des Gesamtgewichtes bei.

Die Erfindung wird anhand eines Ausführungsbeispieles gemäß der folgenden Zeichnungsfiguren näher erläutert. Hierbei zeigt:
- Figur 1: eine Seitenansicht einer Ausführungsform des Verbundbauteiles in der Ruheposition im Schnitt, und
- Figur 2: eine Seitenansicht des in Figur 1 dargestellten Verbundbauteiles in der Arbeitsposition im Schnitt.

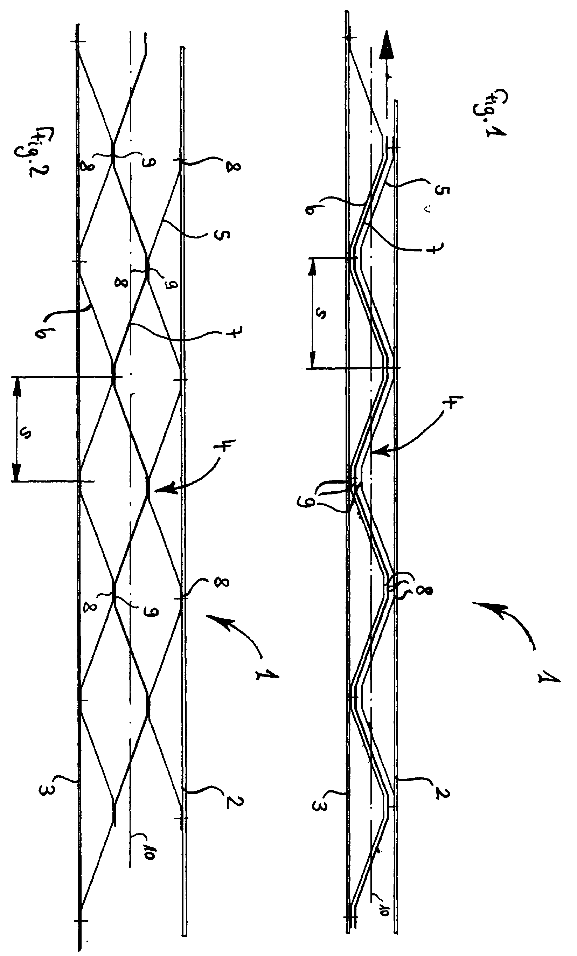

Das in Figur 1 dargestellte Verbundbauteil 1 weist eine obere Begrenzungsschicht 2, eine untere Begrenzungsschicht 3 und eine zwischen diesen Begrenzungsschichten 2,3 angeordnete Zwischenlage 4 auf. Die Zwischenlage 4 umfaßt drei Einzellagen 5,6,7, wobei die mittlere Einzellage 7 von der oberen Einzellage 5 und der unteren Einzellage 6 benachbart ist. Die Einzellagen 5,6,7 sind wellenförmig ausgebildet, wobei die wellenförmige Grundform der Einzellagen 5,6,7 nicht durch Zusammenfügen einer Vielzahl runder bzw. bogenförmiger Abschnitte ausgebildet wird, sondern sich durch Zusammenfügen gerader Abschnitte ergibt. Die Grundform jedes Wellenberges 8 und jedes Wellentales 9 wird durch ein gleichschenkliges Dreieck beschrieben, bei dem die Spitze weggenommen ist. Hierdurch sind die Einzellagen 5,6,7 im Bereich ihrer Wellenberge 8 und Wellentäler 9 eben ausgebildet. Der jeweilige Abstand s zwischen einem Wellenberg 8 und einem Wellental 9 jeder einzelnen Einzellage 5,6,7 ist konstant und für jede einzelne Einzellage 5,6,7 gleich groß. Im Ruhezustand schmiegen sich die einzelnen Einzellagen 5,6,7 in der Art aneinander, daß sie großflächigen Kontakt mit den benachbarten Einzellagen 5,6,7 aufweisen. In dieser Position liegen die Wellenberge 8 der Einzellagen 5,6,7 und die Wellentäler 9 der Einzellagen 5,6,7 jeweils aufeinander und bilden eine kompakte Zwischenlage 4.

Ebenfalls ist in Figur 1 die von einem hier nicht dargestellten und aktivierten Aktor auf die mittlere Einzellage 7 einwirkende Zugkraft als Pfeil dargestellt. Die Zugrichtung verläuft vorzugsweise in Richtung der Hauptachse 10 der mittleren Einzellage 7. Durch Verschieben der mittleren Einzellage 7 mittels eines Aktors erfährt das Verbundbauteil 1 eine Strukturänderung und geht von der in Figur 1 gezeigten Ruheposition in seine in Figur 2 gezeigte Arbeitsposition über.

Figur 2 zeigt das Verbundbauteil 1 in seiner Arbeitsposition. Die mittlere Einzellage 7 ist gegenüber den benachbarten Einzellagen 5,6 um den Abstand s verschoben. Die mittlere Einzellage 7 hat in dieser Position mit der benachbarten oberen Einzellage 5 in der Art Kontakt, daß sich die Wellentäler 9 der oberen Einzellage 5 und die Wellenberge 8 der mittleren Einzellage 7 berühren. Infolge der ebenen Ausbildung der Wellenberge 8 und der Wellentäler 9 ergibt sich auch in der Arbeitsposition eine genügend große Kontaktfläche zwischen den Einzellagen 5, 6, 7, und damit eine ausreichende Festigkeit des Verbundbauteiles 1 insgesamt. Darüber hinaus kann sich die obere Begrenzungsschicht 2 in geringem Maße gegenüber der unteren Begrenzungsschicht 3 in Richtung der Hauptachse 10 der mittleren Einzellage 7 bewegen, ohne daß dies zu einer unaktzeptablen Instabilität der Gesamtstruktur führt. Auch bei einer geringen Verschiebung der Begrenzungsschichten 2,3 in Richtung der Hauptachse 10 verbleibt eine genügend große Kontaktfläche zwischen den Wellenbergen 8 und den Wellentälern 9. Die Vergrößerung des Bauvolumens beim Übergang von der Ruheposition (Fig. 1) und der in Fig. 2 dargestellten Arbeitsposition ergibt sich durch ein Auseinanderdrücken der unteren 3 und oberen Begrenzungsschicht 2 infolge der um den Abstand s verschobenen mittleren Einzellage 7.

### Bezugszeichenliste

- 1: Verbundbauteil
- 2: untere Begrenzungsschicht
- 3: obere Begrenzungsschicht
- 4: Zwischenlage
- 5: obere Einzellage
- 6: untere Einzellage
- 7: mittlere Einzellage
- 8: Wellenberg
- 9: Wellental

## Patentansprüche

1. Verbundbauteil (1) für Kraftfahrzeuge mit mindestens einer das Verbundbauteil (1) außen bedeckenden unteren (3) und oberen Begrenzungsschicht (2) und einer zwischen der mindestens einen unteren (3) und der mindestens einen oberen Begrenzungsschicht (2) angeordneten Zwischenlage (4), **dadurch gekennzeichnet, daß** die Zwischenlage (4) mindestens drei wellenförmige, formsteife, gegeneinander verschiebare Einzellagen (5,6,7) umfaßt, bei denen sowohl bei jeder einzelnen Einzellage (5,6,7) als auch bei den Einzellagen (5,6,7) untereinander jeweils die Abstände s zwischen einem Wellenberg (8) und einem Wellental (9) von gleicher Größenordnung sind, und daß zumindest die obere Einzellage (5) bewegbar ist und die mittlere Einzellage (7) so verschiebar ist, daß die Einzellagen (5,6,7) in einer Ruheposition in der Art angeordnet sind, daß jeweils die Wellenberge (8) und Wellentäler (9) der benachbarten Einzellagen (5,6,7) aufeinander liegen, und in einer Arbeitsposition in der Art angeordnet sind, daß die mittlere Einzellage (7) gegenüber den benachbarten Einzellagen (5,6) um den Abstand s tangential zu den Wellenbergen (8) oder Wellentälern (9) verschoben ist.

2. Verbundbauteil (1) nach Anspruch 1, **dadurch gekennzeichnet, daß** die obere Einzellage (5) der Zwischenlage (4) mit der oberen Begrenzungsschicht (2) verbunden ist.

3. Verbundbauteil (1) nach einem der vorherigen Ansprüche, **dadurch gekennzeichnet, daß** die obere Einzellage (5) der Zwischenlage (4) mit der oberen Begrenzungsschicht (2) im Bereich der Wellenberge (8) verbunden ist.

4. Verbundbauteil (1) nach einem der vorherigen Ansprüche, **dadurch gekennzeichnet, daß** die untere Einzellage (6) der Zwischenlage (4) mit der unteren Begrenzungsschicht (3) verbunden ist.

5. Verbundbauteil (1) nach einem der vorherigen Ansprüche, **dadurch gekennzeichnet, daß** die untere Einzellage (6) der Zwischenlage (4) mit der unteren Begrenzungsschicht (3) im Bereich der Wellentäler (9) verbunden ist.

6. Verbundbauteil (1) nach einem der vorherigen Ansprüche, **dadurch gekennzeichnet, daß** die untere Begrenzungsschicht (3) mit der oberen Begrenzungsschicht (2) mittels mindestens eines Verbindungsmittels beweglich verbunden ist.

7. Verbundbauteil (1) nach Anspruch 6, **dadurch gekennzeichnet, daß** das mindestens eine Verbindungsmittel außerhalb der Zwischenlage (4) angeordnet ist.

8. Verbundbauteil (1) nach Anspruch 6 oder 7, **dadurch gekennzeichnet, daß** das mindestens eine Verbindungsmittel innerhalb der Zwischenlage (4) angeordnet ist, wobei mindestens eine Öffnung in der Zwischenlage (4) vorgesehen ist, durch die das mindestens eine Verbindungsmittel hindurchtritt.

9. Verbundbauteil (1) nach einem der Ansprüche 6 bis 8, **dadurch gekennzeichnet, daß** das mindestens eine Verbindungsmittel eine Stange ist, die an der unteren Begrenzungsschicht (3) und an der oberen Begrenzungsschicht (2) jeweils mit einem Ende gelenkig gelagert ist.

10. Verbundbauteil (1) nach einem der Ansprüche 6 bis 9, **dadurch gekennzeichnet, daß** das mindestens eine Verbindungsmittel ein elastisches Band ist.

11. Verbundbauteil (1) nach einem der vorherigen Ansprüche, **dadurch gekennzeichnet, daß** der Zusammenhalt des Verbundbauteils in der Ruheposition unterstützt wird, indem der zwischen der unteren Begrenzungsschicht (3) und an der oberen Begrenzungsschicht befindliche Raum mit Unterdruck beaufschlagt ist.

12. Verbundbauteil (1) nach einem der vorherigen Ansprüche, **dadurch gekennzeichnet, daß** ein Aktor vorgesehen ist, der die mittlere Einzellage (7) der Zwischenlage (4) bei Aktivierung um einen vorgegebenen Abstand s verschiebt.

13. Verbundbauteil (1) nach Anspruch 12, **dadurch gekennzeichnet, daß** der Aktor ein pneumatischer Aktor ist.
